# FASCICULE DE BREVET EUROPEEN

(11) **EP 2 724 443 B1**
(45) Date de publication et mention de la délivrance du brevet: **23.03.2016**
(21) Numéro de dépôt: 12734967.8
(22) Date de dépôt: 19.06.2012
(51) Int. Cl.: H02J 3/02, H02J 3/26, B60L 3/00, B60L 11/18, H01F 38/00

(54) **SYSTEME ET PROCEDE DE COMPENSATION D'UN CHARGEUR DE BATTERIE EMBARQUE DANS UN VEHICULE**
SYSTEM UND VERFAHREN ZUR KOMPENSATION EINES IN EINEM FAHRZEUG INSTALLIERTEN BATTERIELADEGERÄTS
SYSTEM AND METHOD FOR COMPENSATING A BATTERY CHARGER INSTALLED IN A VEHICLE

(30) Priorité: 22.06.2011 FR 1155519; 28.07.2011 US 201161512511 P
(43) Date de publication de la demande: 30.04.2014
(73) Titulaire: Renault S.A.S., 92100 Boulogne-Billancourt (FR)
(72) Inventeur: FLUXA, Frédéric, F-78490 Galluis (FR); RIPOLL, Christophe, F-78460 Chevreuse (FR)
(86) Numéro de dépôt international: PCT/FR2012/051371
(87) Numéro de publication internationale: WO 2012/175858

(56) Documents cités:
- JP-A- 2000 354 332
- US-A1- 2008 067 974
- US-B1- 6 388 451

## Description

L'invention a pour domaine technique les systèmes de chargement de batterie, et plus particulièrement les chargeurs de batterie embarqués dans un véhicule automobile.

L'utilisation d'un chargeur non isolé pour recharger une batterie, notamment une batterie d'un véhicule électrique, peut entraîner l'apparition d'un courant de fuite lors du raccordement sur le réseau de distribution. Ce courant de fuite transite par la masse et peut déclencher les protections différentielles de courant résiduel disposées entre le chargeur et le réseau de distribution. Lors du déclenchement de ces protections, l'alimentation du chargeur est arrêtée, le processus de charge du véhicule étant alors interrompu.

Généralement, les courants de fuite sont limités en introduisant un transformateur à isolation galvanique entre le réseau et la batterie. Toutefois, la taille de ces transformateurs augmente avec la puissance de charge les traversant. Les chargeurs de batterie embarqués dans les véhicules automobiles électriques sont soumis aux mêmes aléas et aux mêmes remèdes. Cependant le rapport poids/puissance emmagasinée définit l'autonomie du véhicule. Il n'est donc pas satisfaisant d'augmenter la masse du véhicule en incluant des transformateurs à isolation galvanique dans le chargeur embarqué.

Le document US6,388,451 décrit un système de compensation actif de courant de fuite pour un chargeur de véhicule électrique ou hybride.

Un objet de l'invention est de réduire les courants de fuite générés par le chargeur à un niveau inférieur au niveau de déclenchement des protections différentielles de courant résiduel sans augmenter notablement la masse du chargeur.

Un autre objet de l'invention est un système de compensation du courant de fuite applicable à un chargeur alimenté par un réseau de distribution monophasé ou triphasé.

Dans un mode de réalisation, il est proposé un système de compensation d'un courant de fuite d'un chargeur de batterie électrique compris dans une chaîne de traction embarqué dans un véhicule et connecté à un réseau d'alimentation par une terre, par une phase neutre et par au moins une phase différente de la phase neutre, un dispositif de protection différentielle de courant résiduel étant interposé entre le chargeur de batterie et le réseau d'alimentation. Le système de compensation comprend un moyen de compensation d'un courant de fuite circulant depuis le chargeur de batterie vers le réseau d'alimentation sur la terre, ledit moyen de compensation étant apte à émettre sur la masse un courant de compensation de même amplitude que le courant de fuite et de phase opposée à la phase du courant de fuite. L'invention est définie par les caractéristiques des revendications indépendantes. Les modes de réalisations sont définis par les revendications dépendantes.

L'invention présente l'avantage de compenser passivement un courant de fuite en générant un courant de compensation se superposant au courant de fuite, présentant la même amplitude mais une phase opposée. La somme des courants génère alors un courant d'amplitude réduite ou nulle.

Le moyen de compensation de courant de fuite peut comprendre un transformateur par phase différente de la phase neutre du réseau d'alimentation, l'enroulement primaire de chaque transformateur étant relié à une phase du réseau d'alimentation, l'enroulement secondaire du transformateur étant relié à un pont redresseur, le pont redresseur étant connecté à une première extrémité et à une deuxième extrémité d'un pont diviseur de tension, lui-même associé à des capacités.

Les enroulements primaires et les enroulements secondaires des transformateurs peuvent être reliés à la phase neutre.

Les capacités associées au pont diviseur de tension peuvent comprendre une première capacité connectée entre la masse et le point milieu du pont diviseur de tension, une deuxième capacité connectée entre le point milieu et la deuxième extrémité du pont diviseur de tension, et une troisième capacité connectée entre la masse et la deuxième extrémité du pont diviseur de tension.

Le pont diviseur de tension peut comprendre une première extrémité connectée à une première résistance en série avec une deuxième résistance connectée à la deuxième extrémité, le point milieu étant situé entre la première résistance et la deuxième résistance.

Le système de compensation peut comprendre un moyen de détermination de phase connecté entre le filtre de mode commun et la chaîne de traction, apte à émettre sur la masse un courant de compensation de même amplitude que le courant de fuite du filtre de mode commun et de phase opposée à la phase du courant de fuite.

Le moyen de détermination de phase peut comprendre un premier interrupteur à deux positions et un deuxième interrupteur à deux positions connectés chacun par leur curseur à une extrémité d'un enroulement d'un transformateur, l'autre enroulement étant connecté d'une part à la masse par l'intermédiaire d'une capacité et d'autre part au curseur d'un interrupteur à deux positions, les interrupteurs dans une première position étant connectés à la première connexion, les interrupteurs dans une deuxième position étant connectés à la deuxième connexion.

Selon un autre aspect de l'invention, il est proposé un procédé de compensation d'un courant de fuite d'un chargeur de batterie électrique compris dans une chaîne de traction embarqué dans un véhicule et connecté à un réseau d'alimentation par une terre, par une phase neutre et par au moins une phase différente de la phase neutre, un dispositif de protection différentielle de courant résiduel étant interposé entre le chargeur de batterie et le réseau d'alimentation. On génère sur la masse un courant de compensation de même amplitude qu'un courant de fuite circulant depuis le chargeur de batterie vers le réseau d'alimentation sur la masse, et de phase opposée à la phase du courant de fuite.

On peut prélever une partie de la tension d'alimentation, on peut déphaser la tension d'alimentation prélevée, et on peut convertir la tension d'alimentation prélevée en courant dont l'amplitude est comparable à l'amplitude du courant de fuite.

Le chargeur de batterie électrique embarqué pouvant être connecté au réseau d'alimentation par l'intermédiaire d'un filtre de mode commun et d'un moyen de détermination de phase connecté entre le filtre de mode commun et la chaîne de traction, apte à émettre sur la masse un courant de compensation de même amplitude que le courant de fuite du filtre de mode commun et de phase opposée à la phase du courant de fuite, le moyen de détermination de phase comprenant un premier interrupteur à deux positions et un deuxième interrupteur à deux positions connectés chacun par leur curseur à une extrémité d'un enroulement d'un transformateur, l'autre enroulement étant connecté d'une part à la masse par l'intermédiaire d'une capacité et d'autre part au curseur d'un interrupteur à deux positions, les interrupteurs dans une première position étant connectés à la première connexion, les interrupteurs dans une deuxième position étant connectés à la deuxième connexion,
dans lequel, pour compenser le courant de fuite du filtre de mode commun, si la première connexion porte la phase neutre, on peut commuter le premier interrupteur pour relier la première connexion au premier enroulement du transformateur, on peut commuter le deuxième interrupteur pour relier la deuxième connexion au premier enroulement du transformateur, on peut commuter le troisième interrupteur pour relier le deuxième enroulement du transformateur à la première connexion.

Le chargeur de batterie électrique embarqué pouvant être connecté au réseau d'alimentation par l'intermédiaire d'un filtre de mode commun et d'un moyen de détermination de phase connecté entre le filtre de mode commun et la chaîne de traction, apte à émettre sur la masse un courant de compensation de même amplitude que le courant de fuite du filtre de mode commun et de phase opposée à la phase du courant de fuite, le moyen de détermination de phase comprenant un premier interrupteur à deux positions et un deuxième interrupteur à deux positions connectés chacun par leur curseur à une extrémité d'un enroulement d'un transformateur, l'autre enroulement étant connecté d'une part à la masse par l'intermédiaire d'une capacité et d'autre part au curseur d'un interrupteur à deux positions, les interrupteurs dans une première position étant connectés à la première connexion, les interrupteurs dans une deuxième position étant connectés à la deuxième connexion,
dans lequel, pour compenser le courant de fuite du filtre de mode commun, si la deuxième connexion porte la phase neutre, on peut commuter le premier interrupteur pour relier la deuxième connexion au premier enroulement du transformateur, on peut commuter le deuxième interrupteur pour relier la première connexion au premier enroulement du transformateur, on peut commuter le troisième interrupteur pour relier le deuxième enroulement du transformateur à la deuxième connexion.

D'autres buts, caractéristiques et avantages de l'invention apparaîtront à la lecture de la description suivante, donnée uniquement en tant qu'exemple non limitatif et faite en référence aux dessins annexés sur lesquels :
- la figure 1 illustre un premier aspect d'un système de compensation du courant de fuite selon l'invention, et
- la figure 2 illustre un deuxième aspect d'un système de compensation du courant de fuite selon l'invention.

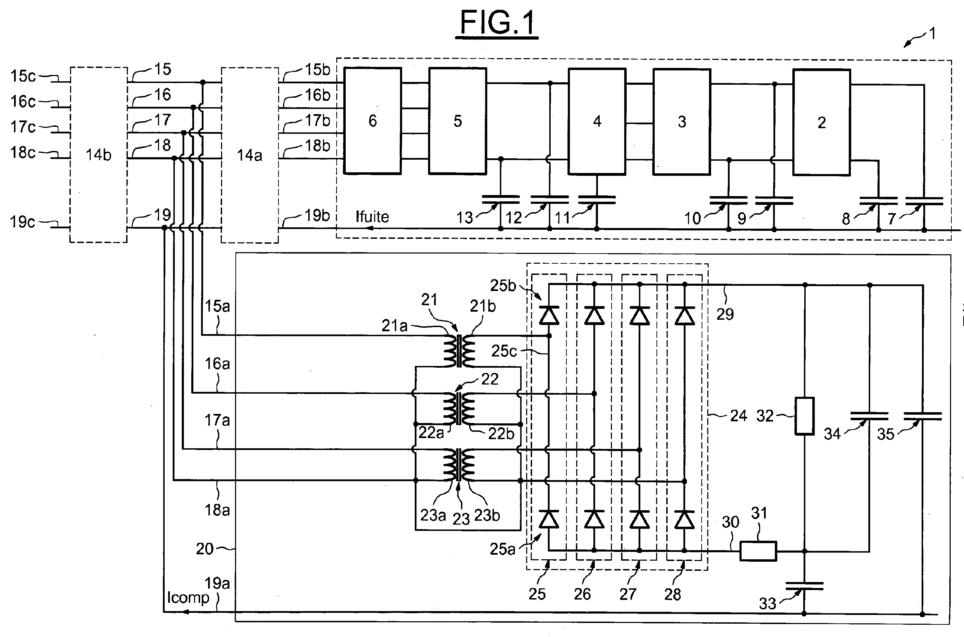

Sur la figure 1, on peut voir une chaîne de traction 1 comprenant, connectés en série, une batterie 2, un dispositif de boost 3, un moteur électrique 4, un dispositif de buck 5, et un dispositif de capacités 6.

Un dispositif de boost 3 est un dispositif qui permet de générer une tension continue de sortie de plus forte valeur que la tension continue d'entrée.

Le dispositif de buck 5 est un hacheur série permettant de réduire la tension de sortie avec une grande efficacité.

La chaîne de traction 1 est connectée en sortie à un filtre en mode différentiel 14a par autant de connexions que de phases d'alimentation 15b à 18b et par une connexion de masse 19b. Le filtre en mode différentiel 14a est relié à un filtre de mode commun 14b de la même manière par des connexions électriques 15 à 19

Le filtre de mode commun 14b est lui-même relié au réseau d'alimentation électrique par des connexions de phases d'alimentation 15c à 18c et par une connexion de terre 19c.

Le fonctionnement de la chaîne de traction 1 génère une tension de mode commun à l'origine d'un courant de fuite dans la masse.

Un couplage apparaît alors entre les éléments de la chaîne de traction 1 et la masse. Des capacités, référencées 7 à 13, symbolisent le couplage issu des tensions de mode commun entre la masse et respectivement, la batterie 2, le dispositif de boost 3, le moteur électrique 4, le dispositif de buck 5 et le dispositif de capacités 6.

Les couplages décrits ci-dessus sont issus soit de phénomènes parasites, soit d'un fonctionnement normal des organes. Il n'est donc pas possible d'agir à la source du courant de fuite afin d'en supprimer la création.

Le système de compensation du courant de fuite comprend un moyen de compensation 20 connecté entre le filtre de mode commun 14b et le filtre de mode différentiel 14a par des connexions électriques 15a à 18a reliées aux différentes phases d'alimentation et par une connexion électrique 19a reliée à la masse. Les connexions 15a à 19a sont essentiellement des dérivations des connexions 15 à 19.

Le moyen de compensation 20 du courant de fuite comprend une connexion par phase d'alimentation différente de la phase neutre 15a, 16a, 17a, une connexion 18a pour la phase neutre et une connexion 19a pour la masse. Les connexions 15a à 17a de phases d'alimentation différentes de la phase neutre sont chacune reliées à une borne de l'enroulement primaire 21a à 23a d'un transformateur 21 à 23. Les autres bornes des enroulements primaires 21a à 23a sont reliées ensemble à la connexion 18a de phase neutre. Les bornes de chacun des enroulements secondaires 21b à 23b sont reliées ensemble à la connexion 18a de phase neutre. Les autres bornes de chacun des enroulements secondaires 21b à 23b sont reliées à un des bras 25 à 28 d'un pont redresseur 24 à diodes.

Un premier bras 25 d'un pont redresseur à diode comprend une première diode 25a reliée par sa cathode à l'anode d'une deuxième diode 25b. La tension de sortie du bras est obtenue entre la connexion en amont de la première diode 25a et la connexion en aval de la deuxième diode 25b.

La tension d'entrée du premier bras 25 est appliquée entre le connecteur 19a de masse et le connecteur 25c situé entre la première diode 25a et la deuxième diode 25b. Les autres bras 26 à 28 présentent la même structure que le premier bras 25. Les quatre bras illustrés sur la figure 1 sont reliés ensemble en parallèle.

Les connexions 29 et 30 de sortie du pont redresseur 24 à diodes sont reliées aux sorties des quatre bras.

Le système de compensation comprend un pont diviseur de tension comprenant une première extrémité connectée à une première résistance 31 en série avec une deuxième résistance 32 connectée à une deuxième extrémité, un point milieu étant situé entre la première résistance 31 et la deuxième résistance 32.

Un pont diviseur de tension est relié par la première extrémité à la connexion 30 de sortie du pont redresseur 24 à diodes, et par la deuxième extrémité à la connexion 29.

Le système de compensation comprend également des capacités reliées en sortie du pont diviseur de tension.

Une première capacité 33 est connectée entre le connecteur 19a de masse et le point milieu du pont diviseur de tension.

Une deuxième capacité 34 est connectée entre le point milieu et la deuxième extrémité du pont diviseur de tension.

Une troisième capacité 35 est connectée entre la masse et la deuxième extrémité du pont diviseur de tension.

Les transformateurs 21 à 23 permettent ensuite de déphaser le signal émis par leurs enroulements secondaires par rapport au signal reçu sur les enroulements primaires. Plus précisément, le signal émis par les enroulements secondaires est en opposition de phase par rapport au signal reçu sur les enroulements primaires. L'inversion de phase est rendue possible par le fait que les enroulements primaires et secondaires sont reliés ensemble à la phase neutre. Par ailleurs, les secondaires des transformateurs sont raccordés de telle sorte que la tension de sortie soit en opposition de phase avec la tension d'entrée. La connexion des neutres primaires et secondaires à la masse, au travers de la capacité 39, permet que le courant de compensation circule vers la connexion 19.

Le pont redresseur à diodes 24 couplé au pont diviseur de tension et aux capacités 33 à 35 permet de reproduire un courant de même amplitude mais en opposition de phase par rapport au courant de fuite. Le courant de compensation est émis par le connecteur 19a de masse en direction du filtre de mode commun 14b. Le courant de compensation circulant dans le même sens que le courant de fuite avec la même amplitude mais en opposition de phase, le courant résultant présente une amplitude réduite ou nulle.

Il apparaît également que bien que décrit dans le cadre d'une alimentation triphasée, les modes de réalisation décrit ci-dessus peuvent être transposés à une alimentation monophasée dans laquelle seuls trois conducteurs d'alimentation sont nécessaires au lieu de cinq. Le système de compensation est alors simplifié en ne nécessitant qu'un transformateur et un pont de redressement à diodes à deux bras, et deux capacités de compensation.

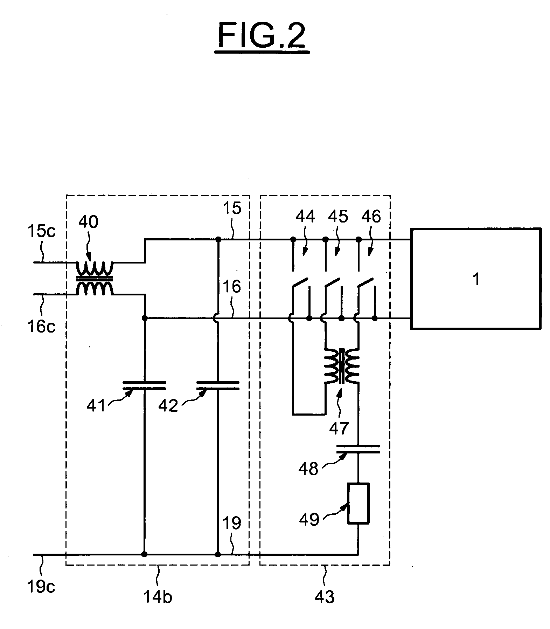

La figure 2 illustre un autre aspect du système de compensation dans lequel on compense les courants de fuite apparaissant du fait de la présence du filtre de mode commun 14b. De plus, cet autre aspect montre l'application du système de compensation à une installation biphasée dans laquelle la position du neutre n'est pas connue.

Sur la figure 2, on peut voir le filtre de mode commun 14b connecté en entrée à la connexion de terre 19c et à deux connexions de phase 15c et 16c. La connexion 15c est reliée à un premier enroulement d'un transformateur 40, le premier enroulement étant par ailleurs relié à la première connexion 15. La connexion 15c est reliée à un deuxième enroulement du transformateur 40, le deuxième enroulement étant relié à la deuxième connexion 16. Une capacité 41 est connectée entre le premier enroulement du transformateur 40 et la connexion de terre 19c. De même, une capacité 42 est connectée entre le premier enroulement du transformateur 40 et la connexion de terre 19c.

La connexion 19c est par ailleurs connectée en sortie du filtre de mode commun 14b à la connexion 19.

On peut voir également un moyen de détermination de phase 43 connecté en entrée au filtre de mode commun 14b et en sortie à la chaîne de traction 1 et comprenant trois interrupteurs à deux positions (44,45,46), un transformateur à deux enroulements 47, une capacité 48 et une résistance 49.

Le premier interrupteur 44 à deux positions est connecté par une position à la première connexion 15, par l'autre position à la deuxième connexion 16, et par le commutateur à une première borne d'un premier enroulement du transformateur 47.

Le deuxième interrupteur 45 à deux positions est connecté par une position à la première connexion 15, par l'autre position à la deuxième connexion 16, et par le commutateur à la deuxième borne du premier enroulement du transformateur 47.

Le troisième interrupteur 46 à deux positions est connecté par une position à la première connexion 15, par l'autre position à la deuxième connexion 16, et par le commutateur à une première borne du deuxième enroulement du transformateur 47. La deuxième borne du deuxième enroulement du transformateur 47 est connectée à la capacité 48, elle-même connectée en sortie à la résistance 49. La résistance 49 est connectée à la connexion 19.

Dans une installation domestique, la phase neutre peut être indifféremment sur l'une ou l'autre des phases d'une installation biphasée. Le moyen de détermination de phase 43 permet d'adapter la compensation de courant de fuite selon que la première connexion 15 ou la deuxième connexion 16 portent la phase neutre. Si le neutre se trouve sur le connecteur 15, un courant de compensation est injecté par le biais de la capacité 42. Si le neutre se trouve sur le connecteur 16, un courant de compensation est injecté par le biais de la capacité 41.

Pour cela, si le neutre est sur la première connexion 15, le premier interrupteur 44 relie la première connexion 15 au premier enroulement du transformateur 47, tandis que le deuxième interrupteur 45 relie la deuxième connexion 16 au premier enroulement du transformateur 47. Le troisième interrupteur 46 relie le deuxième enroulement du transformateur 47 à la première connexion 15.

Si le neutre est sur la deuxième connexion 16, le premier interrupteur 44 relie la deuxième connexion 16 au premier enroulement du transformateur 47, tandis que le deuxième interrupteur 45 relie la première connexion 15 au premier enroulement du transformateur 47. Le troisième interrupteur 46 relie le deuxième enroulement du transformateur 47 à la deuxième connexion 16.

Un procédé de compensation d'un courant de fuite implique la génération sur la masse d'un courant de compensation de même amplitude qu'un courant de fuite circulant depuis le chargeur de batterie vers le réseau d'alimentation sur la masse, et de phase opposée à la phase du courant de fuite.

Pour cela, on peut prélever une partie de la tension d'alimentation, la déphaser et la convertir en courant dont l'amplitude est comparable à l'amplitude du courant de fuite.

Le système de compensation est un système passif dont les éléments sont déterminés en fonction des couplages de mode commun du circuit à compenser. Dans le cas où la valeur du courant de fuite est plus importante que la valeur sur la base de laquelle le dispositif a été conçu et dimensionné, il est possible de compenser l'excès de courant de fuite par un système actif.

Un tel système actif peut comporter un circuit de détection des courants de fuite destiné à venir se connecter sur des connexions au réseau d'alimentation électrique, un circuit de mesure du courant de masse, et des moyens de commande de fonctionnement de l'appareil en fonction du niveau estimé des courants de fuite et du niveau mesuré du courant de masse. Le système actif autorise ou empêche l'alimentation électrique du chargeur en fonction de l'intensité des courants de fuite et de masse, notamment si le courant de fuite n'est pas compensé par le courant de masse.

Le système de compensation décrit ci-dessus permet ainsi de réduire voire de supprimer le courant de fuite pouvant résulter d'un couplage en mode commun des éléments d'une chaîne de traction avec un chargeur de batterie embarqué dans un véhicule.

## Revendications

1. Système de compensation (20) passive d'un courant de fuite d'un chargeur de batterie électrique compris dans une chaîne de traction (1) embarqué dans un véhicule et connecté à un réseau d'alimentation par une terre, par une phase neutre et par au moins une phase différente de la phase neutre, un dispositif de protection différentielle de courant résiduel étant interposé entre le chargeur (1) de batterie et le réseau d'alimentation, comportant un moyen de compensation (20) d'un courant de fuite circulant depuis le chargeur de batterie vers le réseau d'alimentation sur la terre, ledit moyen de compensation étant apte à émettre sur la masse un courant de compensation de même amplitude que le courant de fuite et de phase opposée à la phase du courant de fuite, **caractérisé en ce que** le moyen de compensation (20) de courant de fuite comporte un transformateur (21,22,23) par phase (15a,16a,17a) différente de la phase neutre (18a) du réseau d'alimentation, l'enroulement primaire (21a,22a,23a) et l'enroulement secondaire (21b,22b,23b) de chaque transformateur étant reliés à la phase neutre (18a).

2. Système de compensation selon la revendication 1, dans lequel l'enroulement primaire (21a,22a,23a) de chaque transformateur est relié à une phase (15a,16a,17a,18a) du réseau d'alimentation, l'enroulement secondaire (21b,22b,23b) du transformateur étant relié à un pont redresseur (24),
le pont redresseur (24) étant connecté à une première extrémité et à une deuxième extrémité d'un pont diviseur de tension (31,32), lui-même associé à des capacités (33,34,35).

3. Système de compensation selon la revendication 2, dans lequel les capacités (33,34,35) associées au pont diviseur de tension comprennent
une première capacité (33) connectée entre la masse (19a) et le point milieu du pont diviseur de tension,
une deuxième capacité (34) connectée entre le point milieu et la deuxième extrémité du pont diviseur de tension, et
une troisième capacité (35) connectée entre la masse (19a) et la deuxième extrémité du pont diviseur de tension,
le pont diviseur de tension (31,32) comprenant une première extrémité connectée à une première résistance (31) en série avec une deuxième résistance (32) connectée à la deuxième extrémité, le point milieu étant situé entre la première résistance (31) et la deuxième résistance (32).

4. Système de compensation selon l'une quelconque des revendications précédentes, comprenant un moyen de détermination de phase (43) connecté entre un filtre de mode commun (14b) et la chaîne de traction (1), apte à émettre sur la masse un courant de compensation de même amplitude que le courant de fuite du filtre de mode commun (14b) et de phase opposée à la phase du courant de fuite.

5. Système de compensation selon la revendication 4, dans lequel le moyen de détermination de phase (43) comprend un premier interrupteur à deux positions (44) et un deuxième interrupteur à deux positions (45) connectés chacun par leur curseur à une extrémité d'un enroulement d'un transformateur (47), l'autre enroulement étant connecté d'une part à la masse (19) par l'intermédiaire d'une capacité (48) et d'autre part au curseur d'un interrupteur à deux positions (46), les interrupteurs (44,45,46) dans une première position étant connectés à la première connexion (15), les interrupteurs (44,45,46) dans une deuxième position étant connectés à la deuxième connexion (16).

6. Procédé de compensation passive d'un courant de fuite d'un chargeur de batterie électrique compris dans une chaîne de traction (1) embarqué dans un véhicule et connecté à un réseau d'alimentation par une terre, par une phase neutre et par au moins une phase différente de la phase neutre, un dispositif de protection différentielle de courant résiduel étant interposé entre le chargeur de batterie et le réseau d'alimentation, dans lequel on génère sur la masse un courant de compensation de même amplitude qu'un courant de fuite circulant depuis le chargeur de batterie vers le réseau d'alimentation sur la masse, et de phase opposée à la phase du courant de fuite, **caractérisé en ce que** :
- on prélève une partie de la tension d'alimentation,
- on déphase la tension d'alimentation prélevée, ledit déphasage utilisant un moyen de compensation (20) de courant de fuite comportant un transformateur (21,22,23) par phase (15a,16a,17a) différente de la phase neutre (18a) du réseau d'alimentation, l'enroulement primaire (21a,22a,23a) et l'enroulement secondaire (21b,22b,23b) de chaque transformateur étant reliés à la phase neutre (18a),
- on convertit la tension d'alimentation prélevée en courant dont l'amplitude est comparable à l'amplitude du courant de fuite.

7. Procédé selon la revendication 6, dans lequel le chargeur de batterie électrique embarqué étant connecté au réseau d'alimentation par l'intermédiaire d'un filtre de mode commun (14b) et d'un moyen de détermination de phase (43) connecté entre le filtre de mode commun (14b) et la chaîne de traction (1), apte à émettre sur la masse un courant de compensation de même amplitude que le courant de fuite du filtre de mode commun (14b) et de phase opposée à la phase du courant de fuite, le moyen de détermination de phase (43) comprenant un premier interrupteur à deux positions (44) et un deuxième interrupteur à deux positions (45) connecté chacun par leur curseur à une extrémité d'un enroulement d'un transformateur (47), l'autre enroulement étant connecté d'une part à la masse (19) par l'intermédiaire d'une capacité (48) et d'autre part au curseur d'un interrupteur à deux positions (46), les interrupteurs (44,45,46) dans une première position étant connectés à la première connexion (15), les interrupteurs (44,45,46) dans une deuxième position étant connectés à la deuxième connexion (16),
dans lequel, pour compenser le courant de fuite du filtre de mode commun (14b), si la première connexion (15) porte la phase neutre, on commute le premier interrupteur (44) pour relier la première connexion (15) au premier enroulement du transformateur (47), on commute le deuxième interrupteur (45) pour relier la deuxième connexion (16) au premier enroulement du transformateur (47), on commute le troisième interrupteur (46) pour relier le deuxième enroulement du transformateur (47) à la première connexion (15).

8. Procédé selon la revendication 6, le chargeur de batterie électrique embarqué étant connecté au réseau d'alimentation par l'intermédiaire d'un filtre de mode commun (14b) et d'un moyen de détermination de phase (43) connecté entre le filtre de mode commun (14b) et la chaîne de traction (1), apte à émettre sur la masse un courant de compensation de même amplitude que le courant de fuite du filtre de mode commun (14b) et de phase opposée à la phase du courant de fuite, le moyen de détermination de phase (43) comprend un premier interrupteur à deux positions (44) et un deuxième interrupteur à deux positions (45) connecté chacun par leur curseur à une extrémité d'un enroulement d'un transformateur (47), l'autre enroulement étant connecté d'une part à la masse (19) par l'intermédiaire d'une capacité (48) et d'autre part au curseur d'un interrupteur à deux positions (46), les interrupteurs (44,45,46) dans une première position étant connectés à la première connexion (15), les interrupteurs (44,45,46) dans une deuxième position étant connectés à la deuxième connexion (16),
dans lequel, pour compenser le courant de fuite du filtre de mode commun (14b), si la deuxième connexion (16) porte la phase neutre, on commute le premier interrupteur (44) pour relier la deuxième connexion (16) au premier enroulement du transformateur (47), on commute le deuxième interrupteur (45) pour relier la première connexion (15) au premier enroulement du transformateur (47), on commute le troisième interrupteur (46) pour relier le deuxième enroulement du transformateur (47) à la deuxième connexion (16).

## Patentansprüche

1. Passives Kompensationssystem (20) eines Leckstroms eines elektrischen Batterieaufladegeräts, das in einem Traktionsstrang (1) eines Fahrzeugs enthalten ist und an ein Versorgungsnetzwerk durch eine Erdung, durch eine neutrale Phase und durch mindestens eine von der neutralen Phase unterschiedliche Phase angeschlossen ist, wobei eine Reststrom-Differenzschutzvorrichtung zwischen das Batterieaufladegerät (1) und das Versorgungsnetzwerk eingefügt ist, das ein Kompensationsmittel (20) eines Leckstroms umfasst, der von dem Batterieaufladegerät zu dem Versorgungsnetz auf der Erdung zirkuliert, wobei das Kompensationsmittel geeignet ist, um auf der Masse einen Kompensationsstrom mit derselben Amplitude wie der Leckstrom und entgegengesetzter Phase zu der Phase des Leckstroms auszugeben, **dadurch gekennzeichnet, dass** das Leckstrom-Kompensationsmittel (20) einen Transformator (21, 22, 23) pro Phase (15a, 16a, 17a), die von der neutralen Phase (18a) des Versorgungsnetzwerks unterschiedlich ist, umfasst, wobei die Hauptwicklung (21a, 22a, 23a) und die Sekundärwicklung (21b, 22b, 23b) jedes Transformators mit der neutralen Phase (18a) verbunden sind.

2. Kompensationssystem nach Anspruch 1, wobei die Primärwicklung (21a, 22a, 23a) jedes Transformators mit einer Phase (15a, 16a, 17a, 18a) des Versorgungsnetzwerks verbunden ist, wobei die Sekundärwicklung (21b, 22b, 23b) des Transformators mit einer Gleichrichterbrücke (24) verbunden ist,
wobei die Gleichrichterbrücke (24) an einem ersten Ende und an einem zweiten Ende einer Spannungsteilerbrücke (31, 32) verbunden ist, die selbst mit Kapazitäten (33, 34, 35) assoziiert ist.

3. Kompensationssystem nach Anspruch 2, wobei die Kapazitäten (33, 34, 35), die mit der Spannungsteilerbrücke assoziiert sind, Folgendes umfassen:
eine erste Kapazität (33), die zwischen der Masse (19a) und dem Mittenpunkt der Spannungsteilerbrücke angeschlossen ist,
eine zweite Kapazität (34), die zwischen dem Mittenpunkt und dem zweiten Ende der Spannungsteilerbrücke angeschlossen ist, und
eine dritte Kapazität (35), die zwischen der Masse (19a) und dem zweiten Ende der Spannungsteilerbrücke angeschlossen ist,
wobei die Spannungsteilerbrücke (31, 32) ein erstes Ende umfasst, das an einen ersten Widerstand (31) in Serie mit einem zweiten Widerstand (32), der an das zweite Ende angeschlossen ist, geschaltet ist, wobei der Mittenpunkt zwischen dem ersten Widerstand (31) und dem zweiten Widerstand (32) liegt.

4. Kompensationssystem nach einem der vorhergehenden Ansprüche, das ein Phasenbestimmungsmittel (43) umfasst, das zwischen einem Gleichtaktfilter (14b) und dem Traktionsstrang (1) angeschlossen ist, das geeignet ist, um auf der Masse einen Kompensationsstrom mit derselben Amplitude wie der Leckstrom des Gleichtaktfilters (14b) und zu der Phase des Leckstroms entgegengesetzter Phase auszugeben.

5. Kompensationssystem nach Anspruch 4, wobei das Phasenbestimmungsmittel (43) einen ersten Schalter mit zwei Positionen (44) und einen zweiten Schalter mit zwei Positionen (45) umfasst, die jeweils durch ihren Schieber an ein Ende einer Wicklung eines Transformators (47) angeschlossen sind, wobei die andere Wicklung einerseits an die Masse (19) über eine Kapazität (48) angeschlossen ist und andererseits an den Schieber eines Schalters mit zwei Positionen (46), wobei die Schalter (44, 45, 46) in einer ersten Position an den ersten Anschluss (15) angeschlossen sind, wobei die Schalter (44, 45, 46) in einer zweiten Position an den zweiten Anschluss (16) angeschlossen sind.

6. Passives Kompensationsverfahren eines Leckstroms eines elektrischen Batterieaufladegeräts, das in einem Traktionsstrang (1) eines Fahrzeugs enthalten und an ein Versorgungsnetzwerk durch eine Erdung, eine neutrale Phase und durch mindestens eine Phase, die von der neutralen Phase unterschiedlich ist, angeschlossen ist, wobei eine Reststrom-Differenzschutzvorrichtung zwischen das Batterieaufladegerät und das Versorgungsnetzwerk eingefügt ist, wobei man auf der Masse einen Kompensationsstrom mit derselben Amplitude wie ein Leckstrom, der von dem Batterieaufladegerät zu dem Versorgungsnetzwerk auf der Masse zirkuliert, erzeugt, und mit zu der Phase des Leckstroms entgegengesetzter Phase, **dadurch gekennzeichnet, dass**:
- man einen Teil der Versorgungsspannung entnimmt,
- man die entnommene Versorgungsspannungsphase verschiebt, wobei die Phasenverschiebung ein Leckstrom-Kompensationsmittel (20) verwendet, das einen Transformator (21, 22, 23) pro Phase (15a, 16a, 17a), die von der neutralen Phase (18a) des Versorgungsnetzes unterschiedlich ist, umfasst, wobei die Primärwicklung (21a, 22a, 23a) und die Sekundärwicklung (21b, 22b, 23b) jedes Transformators mit der neutralen Phase (18a) verbunden sind,
- man die entnommene Versorgungsspannung in Strom, dessen Amplitude mit der Amplitude des Leckstroms vergleichbar ist, umwandelt.

7. Verfahren nach Anspruch 6, wobei das elektrische Bord-Batterieaufladegerät an das Versorgungsnetzwerk über ein Gleichtaktfilter (14b) und ein Phasenbestimmungsmittel (43) angeschlossen ist, das zwischen dem Gleichtaktfilter (14b) und dem Traktionsstrang (1) angeschlossen ist, das geeignet ist, auf der Masse einen Kompensationsstrom mit derselben Amplitude wie der Leckstrom des Gleichtaktfilters (14b) und mit zu der Phase des Leckstroms entgegengesetzter Phase auszugeben, wobei das Phasenbestimmungsmittel (43) einen ersten Schalter mit zwei Positionen (44) und einen zweiten Schalter mit zwei Positionen (45) umfasst, die jeweils durch ihren Schieber an ein Ende einer Wicklung eines Transformators (47) angeschlossen sind, wobei die andere Wicklung einerseits an die Masse (19) über eine Kapazität (48) und andererseits an den Schieber eines Schalters mit zwei Positionen (46) angeschlossen, wobei die Schalter (44, 45, 46) in einer ersten Position an den ersten Anschluss (15) angeschlossen sind, wobei die Schalter (44, 45, 46) in einer zweiten Position an den zweiten Anschluss (16) angeschlossen sind,
wobei zum Kompensieren des Leckstroms des Gleichtaktfilters (14b), falls der erste Anschluss (15) die neutrale Phase trägt, man den ersten Schalter (44) umschaltet, um den ersten Anschluss (15) mit der ersten Wicklung des Transformators (47) zu verbinden, man den zweiten Schalter (45) umschaltet, um den zweiten Anschluss (16) mit der ersten Wicklung des Transformators (47) zu verbinden, man den dritten Schalter (46) umschaltet, um die zweite Wicklung des Transformators (47) mit dem ersten Anschluss (15) zu verbinden.

8. Verfahren nach Anspruch 6, wobei das elektrische Bord-Batterieaufladegerät an das Versorgungsnetzwerk über ein Gleichtaktfilter (14b) und ein Phasenbestimmungsmittel (43), das zwischen dem Gleichtaktfilter (14b) und dem Traktionsstrang (1) angeschlossen ist, angeschlossen ist, das geeignet ist, auf der Masse einen Kompensationsstrom mit derselben Amplitude wie der Leckstrom des Gleichtaktfilters (14b) und zu der Phase des Leckstroms entgegengesetzter Phase auszugeben, wobei das Phasenbestimmungsmittel (43) einen ersten Schalter mit zwei Positionen (44) und einen zweiten Schalter mit zwei Positionen (45) umfasst, die jeweils durch ihren Schieber an ein Ende einer Wicklung eines Transformators (47) angeschlossen sind, wobei die andere Wicklung einerseits an die Masse (19) über eine Kapazität (48) und andererseits an den Schieber eines Schalters mit zwei Positionen (46) angeschlossen ist, wobei die Schalter (44, 45, 46) in einer ersten Position an den ersten Anschluss (15) angeschlossen sind, wobei die Schalter (44, 45, 46) in einer zweiten Position an den zweiten Anschluss (16) angeschlossen sind,
wobei man zum Kompensieren des Leckstroms des Gleichtaktfilters (14b), falls der zweite Anschluss (16) die neutrale Phase trägt, den ersten Schalter (44) umschaltet, um den zweiten Anschluss (16) mit der ersten Wicklung des Transformators (47) zu verbinden, man den zweiten Schalter (45) umschaltet, um den ersten Anschluss (15) mit der ersten Wicklung des Transformators (47) zu verbinden, man den dritten Schalter (46) umschaltet, um die zweite Wicklung des Transformators (47) mit dem zweiten Anschluss (16) zu verbinden.

## Claims

1. Compensation system (20) for passively compensating for a leakage current of an electric battery charger contained within a powertrain (1) on board a vehicle and connected to a power supply network by an electrical ground, by a neutral phase and by at least one phase other than the neutral phase, a residual current differential protection device being interposed between the battery charger (1) and the power supply network, comprising a compensation means (20) for compensating for a leakage current flowing from the battery charger to the power supply network on the electrical ground, said compensation means being able to emit, on the electrical ground, a compensation current of the same amplitude as the leakage current and of a phase that is the opposite of the phase of the leakage current **characterized in that** the leakage current compensation means (20) comprises one transformer (21,22,23) per phase (15a,16a,17a) other than the neutral phase (18a) of the power supply network, the primary winding (21a,22a,23a) and the secondary winding (21b,22b,23b) of each transformer being connected to the neutral phase (18a).

2. Compensation system according to Claim 1, in which the primary winding (21a,22a,23a) of each transformer is connected to one phase (15a, 16a, 17a, 18a) of the power supply network, the secondary winding (21b,22b,23b) of the transformer being connected to a rectifier bridge (24),
the rectifier bridge (24) being connected to a first end and to a second end of a voltage divider bridge (31,32) itself associated with capacitors (33,34,35).

3. Compensation system according to Claim 2, in which the capacitors (33, 34, 35) associated with the voltage divider bridge comprise
a first capacitor (33) connected between the electrical ground (19a) and the mid-point of the voltage divider bridge,
a second capacitor (34) connected between the mid-point and the second end of the voltage divider bridge, and
a third capacitor (35) connected between the electrical ground (19a) and the second end of the voltage divider bridge,
the voltage divider bridge (31,32) comprising a first end connected to a first resistor (31) in series with a second resistor (32) connected to the second end, the mid-point being situated between the first resistor (31) and the second resistor (32).

4. Compensation system according to any one of the preceding claims, comprising a phase determining means (43) connected between the common mode filter (14b) and the powertrain (1), able to emit on the electrical ground a compensation current of the same amplitude as the leakage current of the common mode filter (14b) and of a phase that is the opposite of the phase of the leakage current.

5. Compensation system according to Claim 4, in which the phase determining means (43) comprises a first two-position switch (44) and a second two-position switch (45) each of which is connected by its sliding contact to one end of one winding of a transformer (47), the other winding being connected firstly to the electrical ground (19) via a capacitor (48) and secondly to the sliding contact of a two-position switch (46), the switches (44, 45, 4 6) in a first position being connected to the first connection (15), the switches (44, 45, 46) in a second position being connected to the second connection (16).

6. Compensation method for passively compensating for a leakage current of an electric battery charger contained within a powertrain (1) on board a vehicle and connected to a power supply network by an electrical ground, by a neutral phase and by at least one phase other than the neutral phase, a residual current differential protection device being interposed between the battery charger and the power supply network, in which there is generated on the electrical ground a compensation current of the same amplitude as a leakage current flowing from the battery charger to the power supply network on the electrical ground and of a phase that is the opposite of the phase of the leakage current **characterized in that**:
- part of the power supply voltage is tapped off,
- the tapped-off power supply voltage is phase shifted, said please-shifting using a leakage current compensation means (20) comprising one transformer (21,22,23) per phase (15a,16a,17a) other than the neutral phase (18a) of the power supply network, the primary winding (21a,22a,23a) and the secondary winding (21b,22b,23b) of each transformer being connected to the neutral phase (18a),
- the tapped-off power supply voltage is converted into a current the amplitude of which is comparable to the amplitude of the leakage current.

7. Method according to Claim 6, the on-board electric battery charger being connected to the power supply network via a common mode filter (14b) and a phase determining means (43) connected between the common mode filter (14b) and the powertrain (1), able to emit on the electrical ground a compensation current of the same amplitude as the leakage current of the common mode filter (14b) and of a phase that is the opposite of the phase of the leakage current, the phase determining means (43) comprising a first two-position switch (44) and a second two-position switch (45) each of these being connected by their sliding contact to one end of one winding of a transformer (47), the other winding being connected firstly to the electrical ground (19) via a capacitor (48) and secondly to the sliding contact of a two-position switch (46), the switches (44, 45, 46) in a first position being connected to the first connection (15), the switches (44, 45, 46) in a second position being connected to the second connection (16),
in which, in order to compensate for the leakage current of the common mode filter (14b), if the first connection (15) is carrying the neutral phase, the first switch (44) is switched to connect the first connection (15) to the first winding of the transformer (47), the second switch (45) is switched to connect the second connection (16) to the first winding of the transformer (47), the third switch (46) is switched to connect the second winding of the transformer (47) to the first connection (15).

8. Method according to Claim 6, the on-board electric battery charger being connected to the power supply network via a common mode filter (14b) and a phase determining means (43) connected between the common mode filter (14b) and the powertrain (1), able to emit on the electrical ground a compensation current of the same amplitude as the leakage current of the common mode filter (14b) and of a phase that is the opposite of the phase of the leakage current, the phase determining means (43) comprising a first two-position switch (44) and a second two-position switch (45) each of these being connected by their sliding contact to one end of one winding of a transformer (47), the other winding being connected firstly to the electrical ground (19) via a capacitor (48) and secondly to the sliding contact of a two-position switch (46), the switches (44, 45, 46) in a first position being connected to the first connection (15), the switches (44, 45, 46) in a second position being connected to the second connection (16),
in which, in order to compensate for the leakage current of the common mode filter (14b), if the second connection (16) is carrying the neutral phase, the first switch (44) is switched to connect the second connection (16) to the first winding of the transformer (47), the second switch (45) is switched to connect the first connection (15) to the first winding of the transformer (47), the third switch (46) is switched to connect the second winding of the transformer (47) to the second connection (16).
